Europäisches Patentamt

European Patent Office

Office européen des brevets

(11) Veröffentlichungsnummer : **0 126 209**
**B1**

# (12) EUROPÄISCHE PATENTSCHRIFT

(45) Veröffentlichungstag der Patentschrift :
08.07.87

(21) Anmeldenummer : 84101098.6

(22) Anmeldetag : 03.02.84

(51) Int. Cl.⁴ : **B 60 Q   9/00**, B 60 K 20/02

(54) Einrichtung zur wegabhängigen Positionsangabe hydraulisch betätigter Schaltstangen.

(30) Priorität : 19.04.83 DE 3314111

(43) Veröffentlichungstag der Anmeldung :
28.11.84 Patentblatt 84/48

(45) Bekanntmachung des Hinweises auf die Patenterteilung : 08.07.87 Patentblatt 87/28

(84) Benannte Vertragsstaaten :
**DE FR GB IT NL SE**

(56) Entgegenhaltungen :
EP-A- 0 075 693
DE-A- 3 218 143
GB-A- 2 058 963
US-A- 4 037 196

(73) Patentinhaber : **Dr.Ing.h.c. F. Porsche Aktiengesellschaft**
**Porschestrasse 42**
**D-7000 Stuttgart 40 (DE)**

(72) Erfinder : **Lehmann, Ulrich**
**Theodor-Heuss-Strasse 41**
**D-7251 Weissach (DE)**
Erfinder : **Weigele, Hans**
**Stockheimer Strasse 18**
**D-7000 Stuttgart 40 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Einrichtung nach dem Oberbegriff des Anspruchs 1.

Es ist ein halbautomatisches Wechselgetriebe mit Gangvorwahl für ein Kraftfahrzeug, das mit einer Doppelkupplung zusammenarbeitet, bekannt. Zum automatischen Schalten der einzelnen Gangstufen ist es erforderlich, die jeweilige Stellung der Zahnradpaare bzw. der Schaltmuffen zu erkennen, damit eine entsprechend abgestimmte Betätigung der beiden Kupplungen durchgeführt werden kann.

Aus der EP-A-0 075 693 ist ein Gangwähler für ein Getriebe bekannt, bei dem die Stellung des Schalthebels mittels magnetfeldempfindlicher Sensoren und mittels am Schalthebel befestigter Magnete kontakt- und berührungslos zu erfassen ist.

Aufgabe der Erfindung ist es, für ein Doppelkupplungsgetriebe eine Einrichtung zu schaffen, die ein einwandfreies automatisches Schalten der Gangstufen ermöglicht.

Zur Lösung dieser Aufgabe dienen die im Kennzeichen des Anspruchs 1 aufgeführten Merkmale. Weitere vorteilhafte Merkmale enthalten die Unteransprüche.

Durch die Einrichtung nach der Erfindung ist eine elektrische Signalabgabe in Abhängigkeit von der Schaltstangenbewegung möglich. Insbesondere soll bei einem Doppelkupplungsgetriebe die augenblickliche Eingriffsposition der Verzahnung der Zahnradpaare der Gangstufe während des Schaltvorganges gemeldet werden, damit eine entsprechende, abgestimmte Betätigung der beiden Kupplungen erfolgt. Es soll das elektrische Signal beibehalten werden bis die Verzahnungen der Zahnradpaare sicher in Eingriff stehen oder umgekehrt sicher getrennt sind. Die Signalabgabe soll aber auch schon dann über das elektrische Signal erfolgen können, wenn der früheste drehmomentübertragende Eingriff der Zahnradpaare erfolgt ist. Durch die Signalabgabe schon beim Voreingriff und bis zum Endeingriff der Zahnradpaare ist bei einem automatischen Weiterschalten in eine nächsthöhere oder nächstniedrigere Gangstufe eine einwandfreie Funktion des Schaltungsablaufs gewährleistet.

Ein Ausführungsbeispiel der Erfindung ist in der Zeichnung dargestellt und wird nachfolgend näher beschrieben.

Es zeigt :

Figur 1 eine schematische Darstellung einer Schaltstange für die erste und zweite Gangstufe mit Positionssensoren und Positionsgebern in einer Leerlaufstellung,

Figur 2 eine Zwischenstellung der Schaltstange zur Abgabe eines elektrischen Signals beim Voreingriff gemäß Fig. 1,

Figur 3 eine Endstellung der Schaltstange zur Abgabe des elektrischen Signals bis zum Endeingriff gemäß Fig. 1,

Figur 4 ein schematische Darstellung der Schaltstange in einer Stellung zwischen der ersten Gangstufe und einer Leerlaufstellung zur Abgabe des elektrischen Signals beim Voreingriff und

Figur 5 eine schematische Darstellung der Schaltstange in der Leerlaufstellung zur Abgabe des elektrischen Signals beim Endeingriff.

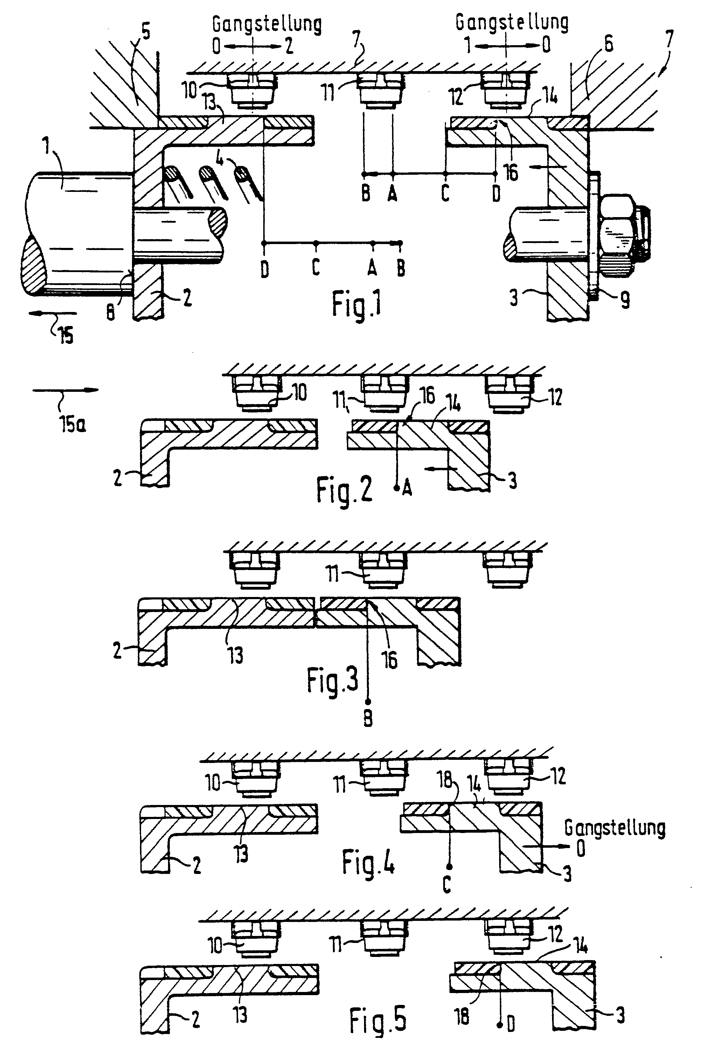

In einem Doppelkupplungsgetriebe, das nicht näher dargestellt ist, ist für jeweils zwei Gangstufen eine Schaltstange vorgesehen. Im Ausführungsbeispiel gemäß Fig. 1 ist die Schaltstange 1 für den ersten und zweiten Gang näher gezeigt. Mit der Schaltstange 1 ist eine Schaltgabel verbunden, die in eine Schaltmuffe, z. B. einer Synchronisierkupplung, eingreift.

Wird die Schaltmuffe verschoben, so wird ein Zahnradpaar, z. B. für den ersten Gang geschaltet. Die Längsbewegungen der Schaltstangen erfolgen durch hydraulische Betätigungen. In ihren Endlagen sind sie durch entsprechende Anschläge gesichert. Diese Elemente der Schaltstange und des Getriebes sind in der Zeichnung nicht näher dargestellt, da sie für die Erfindung nicht von Bedeutung sind.

Die Schaltstange 1 trägt endseitig zwei sich gegenüberstehende Hülsen 2 und 3, die durch eine Feder 4 an Anschlägen 5 und 6 des Gehäuses 7 vorgespannt gehalten werden. Desweiteren ist die Hülse 2 an einem Bund 8 der Schaltstange 1 und die Hülse 3 an einer Scheibe 9 federnd abgestützt.

Die Einrichtung zur elektrischen Signalabgabe umfaßt im wesentlichen mindestens drei Positionssensoren 10, 11 und 12, die gehäuseseitig nebeneinander in einem bestimmten Abstand angeordnet sind. Sie wirken mit mindestens zwei Positionsgebern 13, 14 zusammen, die entsprechend abgestimmt zu den Sensoren gegenüberliegend auf den beiden Hülsen 2, 3 vorgesehen sind, wobei auf der Hülse 2 der Positionsgeber 13 und auf der weiteren Hülse 3 der Positionsgeber 14 liegt.

Insbesondere sind die Positionssensoren 10, 11, 12 als Feldplattendifferentialfühler ausgeführt. Sie arbeiten berührungslos mit einer ringförmigen, magnetisch leitenden Metallfläche der Positionsgeber 13 und 14 zusammen. Die Positionssensoren 10, 11 und 12 geben in den Endstellung A, B, C und D elektrische Signale ab, die die augenblickliche Position des Eingriffs der Zahnradpaare der einzelnen Gangstufen sowie den geschalteten Gang angeben.

Wie in den Fig. 1 bis 3 näher an der Schaltstange 1 für den ersten und den zweiten Gang dargestellt ist, wird aus der Leerlaufstellung, zum Schalten z. B. des ersten Ganges die Schaltstange in Pfeilrichtung 15 bewegt. Die Scheibe 9 nimmt die Hülse 3 gegen die Spannung der Feder 4 mit.

Die Positionsgeber 13 und 14 weisen eine solche Größe auf und sind in einem solchen Abstand zu den Positionssensoren 10, 11 und 12 angeordnet, daß sich die Schaltpositionen A, B, C und D und die notwendigen Hysteresen ergeben.

Als Schaltkante dient die in Bewegungsrichtung 15 vorn liegende Kante 16 des Gebers 14. Diese Kante 16 beeinflußt nach einem Verschieben der Schaltstange in Richtung 15 den benachbarten Sensor 11, der in der Stellung A ein entsprechendes elektrisches Signal an eine Steuerelektronik abgibt. Dieses elektrische Signal meldet, daß das Zahnradpaar der ersten Gangstufe in einem ersten drehmomentübertragenden Voreingriff steht. Nach einem weiteren Verschieben der Schaltstange 1 in Pfeilrichtung 15, in die Position B (Fig. 3), wird über die Schaltkante 16 des Gebers 14 das elektrische Signal beibehalten. Dieses Signal meldet, daß das Zahnradpaar der ersten Gangstufe auf ganzer Zahnbreite sicher in einem Endeingriff ist.

Beim Schalten der zweiten Gangstufe, was nicht näher dargestellt ist, verschiebt sich die Schaltstange 1 in Pfeilrichtung 15a und die Hülse 2 wird vom Bund 8 an der Stange 1 mitgenommen. Bei diesem Vorgang werden die Positionssensoren 10, 11 verwendet und die Signalabgabe erfolgt in den Stellungen A und B entsprechend beim Schalten der ersten Gangstufe.

Ebenso erfolgt eine Signalabgabe beim Herausnehmen z. B. des ersten Ganges (Fig. 4 und 5). Die Schaltstange 1 wird aus der geschalteten Position des ersten Ganges in Pfeilrichtung 15a verschoben. Die Hinterkante des Gebers 14 bildet dann eine Schaltkante 18 für den Sensor 12. Wenn diese Schaltkante 18 den Schaltpunkt C erreicht hat, (Fig. 4), gibt der Sensor 12 ein elektrisches Signal ab. Bis zum Erreichen der Schaltposition D durch die Schaltkante 18 wird das elektrische Signal beibehalten.

Entsprechend der Ausführungen nach den Fig. 1 bis 5 sind die Schaltstangen für die weiteren Gangstufen ausgeführt. So ist eine Schaltstange für den dritten und vierten sowie eine weitere für den fünften und den Rückwärtsgang vorgesehen.

**Patentansprüche**

1. Einrichtung zur wegabhängigen Positionsangabe hydraulisch betätigter Schaltstangen (1) mittels eines elektrischen Signals für ein mehrere Gangstufen aufweisendes und mit einer Doppelkupplung zusammenwirkendes Zahnräderwechselgetriebe eines Kraftfahrzeugs, wobei das elektrische Signal einer elektronischen Steuereinheit zugeführt wird, die mit einem Steuerkreis zur automatischen Ansteuerung der Kupplung bzw. der Kupplungen verknüpft ist, dadurch gekennzeichnet, daß die Einrichtung mehrere magnetisch betätigte Positionssensoren (10, 11, 12) umfaßt, die ortsfest an einem Gehäuse (7) nebeneinander im Abstand angeordnet sind und berührungslos mit Positionsgebern (13, 14) zur Erzielung eines elektrischen Signals bei einer Vor- und Endeingriffsstellung von Zahnrädern des Getriebes einer Gangstufe zusammenwirken und daß die Positionsgeber (13, 14) gegenüberliegend in am Gehäuse (7) an Endanschlägen (5, 6) abgestützten Hülsen (2, 3) gehalten sind und diese endseitig auf der Schaltstange (1) zwischen Mitnehmern (8, 9) unter Zwischenschaltung einer Druckfeder (4) lagern und einzeln von der Schaltstange (1) verschiebbar sind.

2. Einrichtung nach Anspruch 1, dadurch gekennzeichnet, daß die Positionssensoren (10, 11, 12) als Feldplattendifferentialfühler ausgeführt sind, die mit einer ringförmigen, magnetisch leitenden Metallfläche der Positionsgeber (13, 14) auf der Schaltstange (1, 2, 3) zusammenarbeiten.

3. Einrichtung nach den Ansprüchen 1 oder 2, dadurch gekennzeichnet, daß für jeweils zwei Gangstufen (ersten und zweiten Gang, dritten und vierten Gang usw. ) eine Schaltstange (1, 2, 3) mit mindestens drei Positionssensoren (10, 11, 12) und mindestens zwei Positionsgebern (13, 14) vorgesehen sind, wobei zur Abgabe des elektrischen Signals in einer Gangstufe, z. B. für den ersten Gang, jeweils zwei nebeneinanderliegende Positionssensoren (11 und 12) dienen.

4. Einrichtung nach den Ansprüchen 1 bis 3, dadurch gekennzeichnet, daß das elektrische Signal beim Einrücken einer Gangstufe zum drehmomentübertragenden Eingriff der Zahnradpaare der zu schaltenden Gangstufe auf einem Teilbereich ihrer Zahnbreite (Voreingriff) und ein gleiches elektrisches Signal beim Eingriff des Zahnradpaares der zu schaltenden Gangstufe auf voller Zahnbreite (Endeingriff) abgegeben wird.

5. Einrichtung nach Anspruch 1, dadurch gekennzeichnet, daß beim Einrücken von einer Gangstufe in eine Leerlaufstellung über die Positionssensoren (10 bzw. 12) ein elektrisches Signal abgegeben wird und daß dieses elektrische Signal bis zur Einnahme der Leerlaufstellung beibehalten wird.

6. Einrichtung nach einem oder mehreren der vorhergehenden Ansprüche, dadurch gekennzeichnet, daß die in Verschieberichtung (15, 15a) der Schaltstange (1, 2, 3) vorn liegende Kante der Ringfläche des Positionsgebers (13, 14) für die Gangstufe des ersten bis fünften Ganges jeweils eine Schaltkante (16) bildet und daß die in Verschieberichtung der Leerlaufstellung hinten liegende Kante für diese Stellung eine Schaltkante (18) bildet.

7. Einrichtung nach einem oder mehreren der vorhergehenden Ansprüche, dadurch gekennzeichnet, daß die Schaltpunkte (A und B) für das Signal so gelegt sind, daß beim Einrücken einer Gangstufe das elektrische Signal etwa frühestens nach 7,5 mm einsetzt und bis spätestens bei etwa 9,5 mm Verschiebeweg der Schaltstange (1, 2, 3) aus der Ruhelage (Schaltpunkt B) abgegeben wird.

8. Einrichtung nach einem oder mehreren der vorhergehenden Ansprüche, dadurch gekennzeichnet, daß beim Ausrücken einer Gangstufe in eine Leerlaufstellung das elektrische Signal im Schaltpunkt (C) frühestens etwa 3,5 mm vor der Endstellung (Schaltpunkt D) abgegeben wird.

**Claims**

1. Apparatus for indicating the position of hydraulically-actuated shift bars (1) by means of an electrical signal for a variable transmission of a motor vehicle having a plurality of gears and acting with a double clutch, the electrical signal being fed to an electronic control unit connected to the automatic drive for the clutch or clutches by a control circuit, characterised in that the apparatus comprises a plurality of magnetically-actuated position sensors (10, 11, 12) arranged in a fixed manner on a casing (7) adjacent one another with clearance and operate, without contact, with position indicators (13, 14) to achieve an electrical signal in the case of an initial and final engagement position of toothed wheels of the transmission of a gear, and in that the position indicators (13, 14) are held opposite in sleeves (2, 3) abutting the casing (7) against end stops (5, 6), the end faces of the sleeves being mounted on the shift bar (1) between carriers (8, 9), with a compression spring (4) therebetween, and being individually movable by the shift bar (1).

2. Apparatus according to claim 1, characterised in that the position sensors (10, 11, 12) are magnetic field differential sensors cooperating with an annular, magnetically-conducting metal plate of the position indicator (13, 14) on the shift bar (1, 2, 3).

3. Apparatus according to claims 1 or 2, characterised in that for every two gears (first and second gear, third and fourth gear, etc.) a shift bar (1, 2, 3) is provided with at least three position sensors (10, 11, 12) and at least two position indicators (13, 14), two adjacent position sensors (11 and 12) in each case serving to emit the electrical signal in one gear, eg. for the first gear.

4. Apparatus according to claims 1 to 3, characterised in that the electrical signal is emitted during engagement of a gear for the torque-transmitting gearing of the pairs of toothed wheels of the gear to be changed on a part of its toothing width (initial meshing) and the same electrical signal is emitted during engagement of the pair of toothed wheels of the gear to be changed on the full toothing width (final meshing).

5. Apparatus according to claim 1, characterised in that during engagement of a gear into an idling position above the position sensors (10 or 12) an electrical signal is emitted and in that this electric signal is retained until the idling position is taken up.

6. Apparatus according to one or more of the previous claims, characterised in that edge of the annular surface of the position indicator which lies in front in the direction of shifting (15, 15a) of the shift bar (1, 2, 3) forms a respective switching edge (16) for the gear level of the first to the fifth gear and in that the edge which lies to the rear in the direction of shifting of the idling position forms a switching edge (18) for this position.

7. Apparatus according to one or more of the previous claims, characterised in that the switching points (A and B) for the signal are so positioned that during engagement of a gear level the electrical signal is emitted at the earliest after about 7,5 mm and at the latest up to about 9,5 mm of the shifting distance of the shift bar (1, 2, 3) from its resting place (shift position B).

8. Apparatus according to one or more of the previous claims, characterised in that in disengaging a gear into an idling position the electrical signal is emitted in shift position (C) at the earliest about 3,5 mm before the final position (shift position D).

## Revendications

1. Dispositif de repérage de position en fonction du déplacement de tringles de changement de vitesse (1) actionnées hydrauliquement au moyen d'un signal électrique pour une boîte de changement de vitesses à engrenages d'un véhicule comportant plusieurs vitesses et coopérant avec un double embrayage, le signal électrique étant transmis à une unité de commande électronique combinée à un circuit de commande pour la manœuvre automatique de l'embrayage ou des embrayages, caractérisé en ce que le dispositif comprend plusieurs capteurs de positions actionnés magnétiquement (10, 11, 12) qui sont disposés fixement à intervalles dans des positions contiguës sur un carter (7) et coopèrent sans contact avec des transmetteurs de position (13, 14) pour obtenir un signal électrique dans une position d'engrènement initial et d'engrènement final de pignons des engrenages d'une vitesse, et en ce que les capteurs de position (13, 14) sont maintenus en regard dans des manchons (2, 3) s'appuyant sur le carter (7) sur des butées terminales (5, 6) et sont placés vers les extrémités sur la tringle de changement de vitesse (1) entre des entraîneurs (8, 9), avec interposition d'un ressort de compression (4) et peuvent être déplacés séparément par la tringle de changement de vitesse (1).

2. Dispositif selon la revendication 1, caractérisé en ce que les capteurs de position (10, 11, 12) sont réalisés sous la forme de capteurs différentiels à magnétorésistance qui coopèrent avec une surface métallique annulaire magnétiquement conductrice des capteurs de position (13, 14) situés sur la tringle de changement de vitesse (1, 2, 3).

3. Dispositif selon la revendication 1 ou 2, caractérisé en ce qu'il est prévu pour chaque paire de rapports (première et seconde, troisième et quatrième, etc. ) une tringle de changement de vitesse (1, 2, 3) comportant au moins trois capteurs de position (10, 11, 12) et au moins deux transmetteurs de position (13, 14), deux capteurs de position (11 et 12) contigus servant à délivrer le signal électrique dans chaque rapport, par exemple pour la première.

4. Dispositif selon les revendications 1 à 3, caractérisé en ce que le signal électrique est délivré, lors de l'enclenchement d'une vitesse pour l'engrènement avec transmission des couples des paires de pignons de la vitesse à enclencher sur une partie de sa largeur de dent (engrènement initial) et un même signal électrique est délivré lors de l'engrènement de la paire de pignons du rapport à enclencher sur toute la largeur de dent (engrènement final).

5. Dispositif selon la revendication 1, caractérisé en ce que, lors du passage d'une vitesse à une position de point mort, un signal électrique est délivré par l'intermédiaire des capteurs de position (10, respectivement 12), et en ce que ce signal électrique est conservé jusqu'à l'enclenchement de la position de point mort.

6. Dispositif selon une ou plusieurs des revendications précédentes, caractérisé en ce que le bord de la surface annulaire du capteur de position (13, 14) situé en avant dans le sens de déplacement (15, 15a) de la tringle de changement de vitesse (1, 2, 3) constitue pour chacun des rapports de la première à la cinquième un bord de commutation (16) respectif, et en ce que le bord situé en arrière dans le sens de déplacement vers la position de point mort, constitue un bord de commutation (18) pour cette position.

7. Dispositif selon une ou plusieurs des revendications précédentes, caractérisé en ce que les points d'enclenchement (A et B) pour le signal sont placés de façon que, lors de l'enclenchement d'une vitesse, le signal électrique s'établisse au bout de 7,5 mm environ au plus tôt et soit délivré au plus tard pour un trajet de déplacement de la tringle de changement de vitesse (1, 2, 3) d'environ 9,5 mm à partir de la position de repos (point d'enclenchement B).

8. Dispositif selon une ou plusieurs des revendications précédentes, caractérisé en ce que, lors du désenclenchement d'une vitesse pour rejoindre une position de point mort, le signal électrique au point d'enclenchement (C) est délivré au plus tôt environ 3,5 mm avant la position finale (point d'enclenchement D).

0 126 209

Gangstellung 0 → 2        7        Gangstellung 1 → 0

Fig.1

Fig.2

Fig.3

Fig.4

Fig.5